Europäisches Patentamt

European Patent Office

Office européen des brevets

(11) Veröffentlichungsnummer: **0 217 053**
**B1**

(12) **EUROPÄISCHE PATENTSCHRIFT**

(45) Veröffentlichungstag der Patentschrift:
**25.10.89**

(21) Anmeldenummer: **86110509.6**

(22) Anmeldetag: **30.07.86**

(51) Int. Cl.⁴: **F16B 13/06**

(54) Spreizanker.

(30) Priorität: **03.10.85 DE 3535262**

(43) Veröffentlichungstag der Anmeldung:
**08.04.87 Patentblatt 87/15**

(45) Bekanntmachung des Hinweises auf die Patenterteilung:
**25.10.89 Patentblatt 89/43**

(84) Benannte Vertragsstaaten:
**AT CH DE FR GB IT LI NL SE**

(56) Entgegenhaltungen:
**EP-A- 0 068 227**
**DE-B- 1 221 056**
**DE-U- 8 222 455**
**US-A- 3 200 692**
**US-A- 4 339 217**

(73) Patentinhaber: **Upat GmbH & Co, Freiburger
Strasse 9 Postfach 1320, D-7830 Emmendingen(DE)**

(72) Erfinder: **Frischmann, Albert, Hürnheimweg 3,
D-7832 Kenzingen(DE)**
Erfinder: **Kistner, Herbert, Am Mühlbach 10,
D-7800 Freiburg(DE)**
Erfinder: **Rieger, Johannes, Lindenstrasse 3a,
D-7830 Emmendingen 13(DE)**
Erfinder: **Zimmermann, E. Harald, Romaneistrasse 13,
D-7830 Emmendingen(DE)**
Erfinder: **Mermi, Kurt, Breitestrasse 10,
D-7835 Teningen 2(DE)**

(74) Vertreter: **Rackette, Karl, Dipl.-Phys. Dr.-Ing,
Kaiser-Joseph-Strasse 179 Postfach 1310,
D-7800 Freiburg(DE)**

## Beschreibung

Die Erfindung betrifft einen Spreizanker, der am in Einsteckrichtung vorderen Ende einen sich in Einsteckrichtung erweiternden Spreizkonus aufweist, auf den eine Spreizhülse aufschiebbar ist, die mit mehreren sich von ihrem vorderen Rand aus erstreckenden Längsschlitzen versehen ist, durch die wenigstens zwei sich gegenüberliegende Spreizlamellen gebildet sind, die an ihren in Einsteckrichtung weisenden Stirnflächen mit Schneideinsätzen versehen sind.

Ein derartiger Spreizanker ist aus der US-A 3 200 692 bekannt und verfügt über einen Spreizkonus, der als separates Bauteil in das einsteckseitige Ende der Spreizhülse einführbar ist und entlang dessen Konusfläche die Spreizlamellen aufgleiten, wenn der Spreizkonus auf dem Bohrlochgrund aufsitzt und die Spreizhülse in Richtung auf den Bohrlochgrund vorgetrieben wird. Die Stirnflächen der Spreizlamellen sind mit einer harten Beschichtung aus einem Schleifmittel überzogen, das dazu dient, die Bohrlochwand mit einer konischen Hinterschneidung zu versehen.

Aus der US-A 4 339 217 ist ein Spreizanker mit einer im Spreizkonus verschraubten Ankerstange bekannt, bei dem zum Befestigen von Gegenständen ein zylindrisches Bohrloch mit einer konischen Hinterschneidung im Bohrlochtiefsten vorbereitet werden muß. Zur Erzeugung der konischen Hinterschneidung ist ein spezielles Werkzeug notwendig, wodurch sich eine zeitraubende Handhabung des bekannten Spreizankers ergibt.

In der DE-U 8 222 455 ist ein Spreizanker beschrieben, der über eine mit einem Außengewinde versehene Ankerstange verfügt, die massiv ausgebildet ist und am vorderen Ende einen Längsschlitz aufweist, in den ein Spreizkeil mit ebenen Keilflächen eintreibbar ist. Da der Spreizkeil zu Beginn des Setzens nur mit Hilfe eines Ansatzes im Schlitz der Gewindestange eingeklemmt ist, ergibt sich eine umständliche Handhabung. Außerdem ist die Kraftverteilung nach dem Setzen des bekannten Ankers im Verankerungsbereich nicht optimal.

Der Erfindung liegt die Aufgabe zugrunde, einen Spreizanker zu schaffen, der sich durch eine einfache Handhabung und eine günstige Kraftverteilung im Verankerungsbereich auszeichnet.

Diese Aufgabe wird erfindungsgemäß dadurch gelöst, daß der Spreizkonus am vorderen Ende einer Ankerstange angeformt ist, auf der die Spreizhülse in axialer Richtung verschiebbar angeordnet ist, und daß die Wandstärke der Spreizhülse über die Länge der Spreizlamellen in Richtung auf deren Stirnflächen stetig zunimmt.

Zum Setzen der Ankerstange ist es nach dem Einführen der Ankerstange und Aufschieben der Spreizhülse erforderlich, der Spreizhülse während des Eintreibvorganges mit Hilfe eines Setzwerkzeuges eine Rotationsbewegung zu verleihen, so daß die vorzugsweise zylindrischen stiftförmigen Schneideinsätze eine Hinterschneidung des vorgebohrten zylindrischen Bohrlochs bewirken. Da die Spreizlamellen so ausgebildet sind, daß ihre Wandstärke in Richtung auf deren Stirnflächen zunimmt, ergibt sich einerseits eine besonders günstige Kraftverteilung im Verankerungsbereich und andererseits ein Freischneiden unter Bildung eines Freiwinkels, so daß ein Verklemmen der Spreizschenkel verhindert wird. Da die Spreizhülse zu Beginn des Setzvorganges auf der Ankerstange aufgeschoben ist, ergibt sich eine einfache Handhabung.

Um eine sichere Verbindung der Spreizhülse mit dem Setzwerkzeug zu gestatten, ist auf der den Schneideinsätzen gegenüberliegenden Stirnseite der Spreizhülse ein paar Mitnehmerklauen vorgesehen. Die Längsschlitze liegen in Ebenen, die gegenüber den Radialebenen der Spreizhülse seitlich versetzt sind. Bei einem vorteilhaften Ausführungsbeispiel liegen die Längsschlitze in vier Ebenen, von denen das erste Paar im Schnitt mit der Stirnfläche ein erstes Sehnenpaar definiert und von denen das zweite Paar sich im rechten Winkel zum ersten Paar mit gleichem gegenseitigen Abstand erstreckt. Die als Schneideinsätze verwendeten stiftförmigen Zylinder sind gegenüber der Längsachse der Spreizhülse gekippt und auf der Stirnfläche der Spreizlamellen in Drehrichtung gegenüber der Mittellängsachse der Spreizlamellen versetzt angeordnet, um eine möglichst günstige Schneidgeometrie zu erzielen.

Die Erfindung wird nachfolgend anhand eines in der Zeichnung dargestellten Ausführungsbeispiels erläutert. Es zeigen:

Fig. 1 einen Spreizanker gemäß der Erfindung im Halbschnitt in einer Seitenansicht,

Fig. 2 die Spreizhülse des Spreizankers ohne dessen Ankerstange in einer der Fig. 1 entsprechenden Darstellungsweise,

Fig. 3 eine Draufsicht auf den vorderen Hülsenrand der Spreizhülse,

Fig. 4 den Spreizkonus der Ankerstange sowie eine Spreizlamelle im Teilschnitt zur Veranschaulichung der Winkel am Spreizkonus und der Mantelfläche der Spreizhülse und

Fig. 5 eine Fig. 4 entsprechende Darstellung zur Veranschaulichung der Kraftverteilung im Bohrloch auf der Mantelfläche der Spreizhülse.

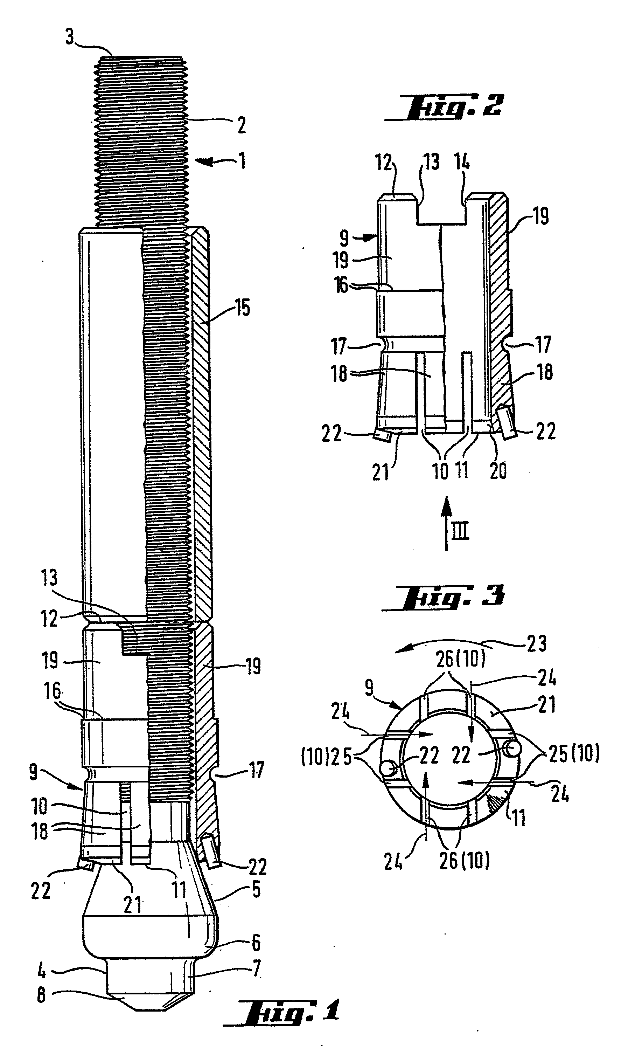

Wie man in Fig. 1 erkennt, verfügt der Spreizanker über eine Ankerstange 1 mit einem Außengewinde 2, das die Befestigung eines Gegenstandes an dem in Fig. 1 oben gezeichneten hinteren Ende 3 der Ankerstange 1 gestattet.

Das Außengewinde 2 erstreckt sich bis in die Nähe eines im Bereich des vorderen Endes 4 der Ankerstange 1 ausgebildeten Spreizkonus 5. Der Spreizkonus 5 erweitert sich in Richtung auf das vordere Ende 4 und geht in einen ersten zylindrischen Absatz 6 über, dessen Durchmesser größer als der mit dem Außengewinde 2 versehene Teil der Ankerstange 1 ist.

An den ersten zylindrischen Absatz 6 schließt sich in Einsteckrichtung des Spreizankers ein zweiter zylindrischer Absatz 7 an, dessen Durchmesser dem Durchmesser des Außengewindes 2 entspricht. Die Stirnfläche des zweiten zylindrischen Absatzes 7 ist als Kegelstumpf 8 ausgebildet und bildet eine stumpfe Fläche für die Zentrierung der

Ankerstange 1 im Bohrlochgrund eines zylindrischen Bohrloches, das im Befestigungsgrund zum Setzen des Spreizankers gebohrt worden ist.

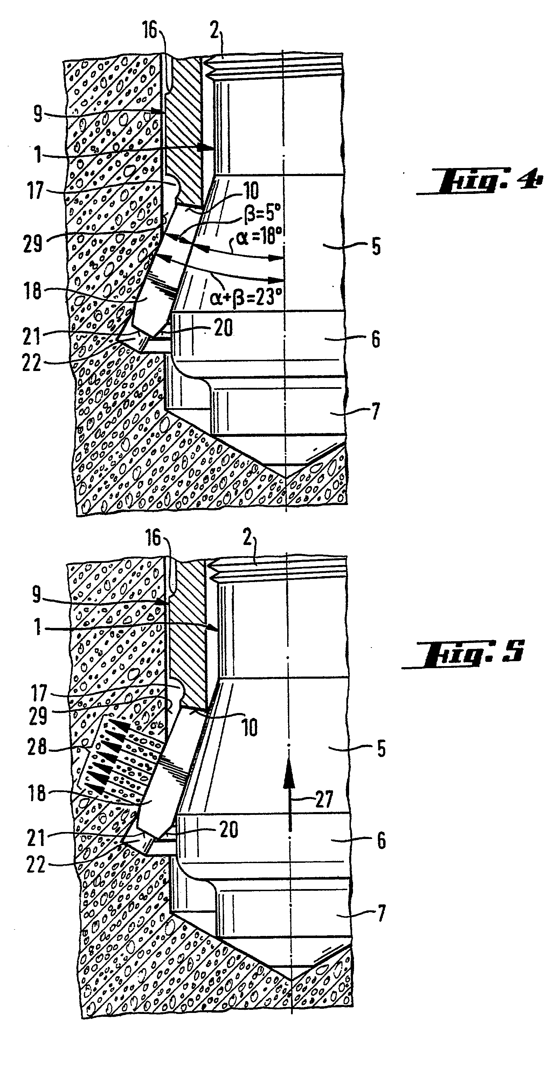

In den Figuren 1 und 2 ist eine auf den Spreizkonus 5 aufdrückbare Spreizhülse 9 dargestellt, in der mehrere Längsschlitze 10 ausgebildet sind, die sich vom vorderen Hülsenrand 11 aus in Längsrichtung der Spreizhülse 9 erstrecken.

Am hinteren Hülsenrand 12 sind in der Spreizhülse 9 zwei sich radial gegenüberstehende Mitnehmerklauen 13, 14 in Gestalt rechtwinklig begrenzter Ausnehmungen vorgesehen. Gegen den hinteren Hülsenrand 12 der Spreizhülse 9 ist eine Distanzhülse 15 andrückbar, die aus einem anderen Material als die Spreizhülse 9 bestehen kann und auch einen anderen Durchmesser als die Spreihülse 9 aufweisen kann, wodurch ein Klemmen im Bohrloch verhindert werden kann und die zum Setzen verwendete Maschine infolge des Trennens der Hülsen in eine Spreizhülse 9 und eine Distanzhülse 15 zum Setzen keine sehr hohe Antriebsleistung benötigt.

Wie man am besten in Fig. 2 erkennt, ist der Innendurchmesser der Spreizhülse 9 überall konstant und verändert sich in Längsrichtung der Spreizhülse 9 nicht. Dagegen erkennt man in Fig. 2, daß der Außendurchmesser der Spreizhülse 9 etwa in der Mitte der Spreizhülse 9 am größten ist und dort eine Schulter 16 auf der äußeren Oberfläche der Spreizhülse 9 bildet. Die Schulter 16 hat einen geringfügig größeren Durchmesser als der Bereich 19 zwischen der Schulter 16 und dem hinteren Hülsenrand 12.

An der in Einsteckrichtung weisenden Seite der Schulter 16 geht diese in eine umlaufende Ringnut 17 über, die eine Sollbiegestelle für die durch die sich bis zur Ringnut 17 erstreckenden Längsschlitze 10 gebildeten Spreizlamellen 18 darstellt.

Die Spreizlamellen 18 weisen auf der Innenseite des vorderen Hülsenrandes 12 eine Abschrägung 20 auf, deren Winkel in etwa dem Konuswinkel des Spreizkonus 5 entspricht. Die am vorderen Hülsenrand 11 ausgebildeten Stirnflächen 21 der Spreizlamellen 18 verlaufen im rechten Winkel zur Längsachse der Ankerstange 1 oder sind, wie in der Zeichnung dargestellt, abgeschrägt.

Die Spreizhülse 9 ist mit wenigstens zwei Schneideinsätzen 22 versehen, die als zylinderförmige Hartmetallstifte ausgebildet sein können. Wie man in den Figuren 1 und 2 erkennt, sind die Schneideinsätze 22 gegenüber der Längsachse der Spreizhülse 9 gekippt.

In Fig. 3 ist veranschaulicht, daß die Schneideinsätze 22 weiterhin gegenüber der Mittellängsachse der Spreizlamellen 18 in Drehrichtung versetzt angeordnet sind. Hierdurch ergibt sich beim Aufspreizvorgang der Spreizhülse 9 eine Schneidgeometrie, die eine wirksame Spanabfuhr während des Hinterschneidvorganges gestattet, der erfolgt, wenn nach dem Setzen des Spreizankers in eine zylindrische Bohrung mit Hilfe eines Setzwerkzeuges die Spreizhülse 9 auf den Spreizkonus 5 rotierend aufgedrückt wird. Bei einem solchen Setzvorgang erweitert sich die Spreizhülse 9 und bewirkt ein Hinterschneiden der vorgebohrten zylindrischen Bohrung. Nach dem Aufweitvorgang verbleiben die Ankerstange 1 und die Spreizhülse 9 im Bohrloch, so daß die Spreizhülse 9 zusammen mit der Ankerstange 1 neben der Funktion eines Hinterschnittwerkzeuges die Funktion eines Befestigungselementes haben. Nach dem Aufschieben der Distanzhülse 15 kann an dem über das Bohrlochrand überstehenden hinteren Ende 3 der Ankerstange 1 der zu befestigende Gegenstand angebracht werden, indem eine Unterlegscheibe und eine Sechskantmutter verwendet werden, die in die Zeichnung nicht dargestellt sind.

Neben der versetzten Anordnung der Schneideinsätze 22 erkennt man in Fig. 3 auch die nichtzentrische Anordnung der Längsschlitze 10. Weiterhin ist die Drehrichtung der Spreizhülse 9 durch eine Pfeil 23 veranschaulicht. Die Spanabfuhrrichtung ist durch Pfeile 24 verdeutlicht.

Man erkennt in Fig. 3, daß die Längsschlitze 10 in vier Ebenen liegen, von denen das erste Paar 25 im Schnitt mit der Stirnfläche der Spreizhülse 9 ein erstes Sehnenpaar definiert und von denen das zweite Paar 26 sich im rechten Winkel zum ersten Paar mit gleichem gegenseitigem Abstand erstreckt. Auf diese Weise werden acht Spreizlamellen 18 gebildet, von denen vier eine erste Form und vier weitere eine zweite Form haben. Die Schneideinsätze 22 befinden sich bei einem bevorzugten Ausführungsbeispiel auf zwei gegenüberliegenden Spreizlamellen 18, deren seitliche Schlitzflächen parallel zueinander verlaufen.

In den Figuren 4 und 5 sind die sich aus der Längsschnittsform der Spreizlamellen 18 ergebenden Konsequenzen veranschaulicht, die sich daraus ergeben, daß die Wandstärke der Spreizlamellen 18 in Richtung auf die Stirnflächen 21 zunimmt. Wenn der Konuswinkel $\alpha$ beispielsweise 18° beträgt und die Abschrägung infolge der Verjüngung der Spreizlamellen 18 in Richtung auf die Ringnut 17 $\beta$=5° ist, so ergibt sich auf der Mantelfläche der Spreizhülse 9 ein Konuswinkel, der gleich der Summe der beiden oben erwähnten Winkel, d.h. 23°, beträgt. Durch die konische Verjüngung der Spreizschenkeldicken wird auf diese Weise erreicht, daß der Hinterschnittwinkel des eingesetzten Befestigungselementes im Bohrloch 29 ca. 10° größer wird als der Winkel des Konusbolzens, d.h. 46° statt 36°. Dadurch wird die Kraftverteilung im Verankerungsbereich wesentlich verbessert, was durch Fig. 5 veranschaulicht ist. Beim Einleiten einer Zugkraft in Richtung des Pfeiles 27 entsteht auf der Mantelfläche der Spreizlamellen 18 eine Kraftverteilung, die durch die Pfeilschar 28 veranschaulicht ist. In Achsrichtung nimmt die Spreizkraft in Richtung zur Stirnfläche 21 der Spreizlamellen 18 ab. Während also die Kraft in Achsrichtung vom vorderen Ende 4 ausgehend zunimmt, nimmt sie in Fig. 5 in waagerechter Richtung nach links ab, so daß sich eine Spreizkraftreduzierung ergibt. Damit sind eine sichere Aufspreizung der Spreizlamellen 18 während des Setzens beim Auflaufen auf den Spreizkonus 5 und eine maximale Hinterschneidung des Bohrloches gewährleistet.

Die konische Verjüngung der Spreizschenkeldicken ermöglicht ein müheloses Setzen des Ankers, weil die in den Hinterschnittraum gleitenden Spreizlamellen 18 an der Biegestelle nicht verklemmen und sich im Endzustand ohne Spiel an die hinterschnittene Bohrlochwand anlegen.

Da der kegelförmige Spreizkonus 5 im vorderen Bereich der Ankerstange 1 in den ersten zylindrischen Absatz 6 übergeht, verhindert dieser ein Umknicken und Überziehen der Spreizlamellen 18 bei einem Zugversuch. Der abgesetzte zweite zylindrische Absatz 7 am in der Zeichnung unteren Ende der Ankerstange 1 bildet den nötigen Freiraum zur Aufnahme des durch den Hinterschnitt entstehenden Abraumes.

Selbstverständlich können statt einer Distanzhülse 15 auch mehrere gleiche oder unterschiedliche Distanzhülsen verwendet werden.

## Patentansprüche

1. Spreizanker, der am in Einsteckrichtung vorderen Ende (4) einen sich in Einsteckrichtung erweiternden Spreizkonus (5) aufweist, auf den eine Spreizhülse (9) aufschiebbar ist, die mit mehreren sich von ihrem vorderen Rand (11) aus erstreckenden Längsschlitzen (10) versehen ist, durch die wenigstens zwei sich gegenüberliegende Spreizlamellen (18) gebildet sind, die an ihren in Einsteckrichtung weisenden Stirnflächen (21) mit Schneideinsätzen (22) versehen sind, dadurch gekennzeichnet, daß der Spreizkonus (5) am vorderen Ende einer Ankerstange (1) angeformt ist, auf der die Spreizhülse (9) in axialer Richtung verschiebbar angeordnet ist, und daß die Wandstärke der Spreizhülse (9) über die Länge der Spreizlamellen (18) in Richtung auf deren Stirnflächen (21) stetig zunimmt.

2. Spreizanker nach Anspruch 1, dadurch gekennzeichnet, daß die Längsschlitze (10) in Ebenen liegen, die gegenüber den Radialebenen der Spreizhülse (9) seitlich versetzt sind.

3. Spreizanker nach Anspruch 2, dadurch gekennzeichnet, daß die Längsschlitze (10) in vier Ebenen liegen, von denen das erste Paar (25) im Schnitt mit der Stirnfläche (21) ein erstes Sehnenpaar definiert und von denen das zweite Paar (26) sich im rechten Winkel zum ersten Paar (25) mit gleichem gegenseitigen Abstand erstreckt.

4. Spreizanker nach Anspruch 1, dadurch gekennzeichnet, daß die Längsschlitze (10) sich bis an eine in Umfangsrichtung um die Spreizhülse (9) verlaufende Ringnut (17) erstrecken.

5. Spreizanker nach Anspruch 4, dadurch gekennzeichnet, daß die Spreizhülse (9) auf der von den Spreizlamellen (18) wegweisenden Seite der Ringnut (17) eine Schulter (16) aufweist.

6. Spreizanker nach Anspruch 5, dadurch gekennzeichnet, daß der Innendurchmesser der Spreizhülse (9) in Längsrichtung konstant ist, während der Außendurchmesser im Bereich der Schulter (16) am größten ist und mit dem Außendurchmesser am vorderen Ende der ungespreizten Spreizlamellen (18) übereinstimmt.

7. Spreizanker nach Anspruch 1, dadurch gekennzeichnet, daß auf der Spreizkonus den Schneideinsätzen (22) gegenüberliegenden Stirnseite (12) der Spreizhülse (9) Mitnehmerklauen (13, 14) vorgesehen sind.

8. Spreizanker nach einem der vorstehenden Ansprüche, dadurch gekennzeichnet, daß derSpreizkonus (5) im vorderen Bereich der Ankerstange (1) in zwei zylindrische Absätze (6, 7) übergeht.

## Claims

1. An expansion anchor with at the end (4) which is the front end in the direction of insertion, has an expansion cone (5) which increases in size in the direction of insertion and on to which can be pushed an expansion sleeve (9) provided with a plurality of longitudinal slits (10) which extend from the front edge (11) of the expansion sleeve and which form at least two mutually oppositely disposed expansion segments (18) which are provided with cutting inserts (22) at their end faces (21) which face in the direction of insertion, characterised in that the expansion cone (5) is formed on the front end of an anchor rod (1) on which the expansion sleeve (9) is arranged displaceably in the axial direction and that the wall thickness of the expansion sleeve (9) steadily increases over the length of the expansion segments (18) towards the end faces (21) thereof.

2. An expansion anchor according to claim 1 characterised in that the longitudinal slits (10) are disposed in planes which are laterally displaced with respect to the radial planes of the expansion sleeve (9).

3. An expansion anchor according to claim 2 characterised in that the longitudinal slits (10) are disposed in four planes of which the first pair (25) defines a first pair of chords at the intersection with the end face (21) and the second pair (26) extends at a right angle to the first pair (25) with the same mutual spacing.

4. An expansion anchor according to claim 1 characterised in that the longitudinal slits (10) extend as far as an annular groove (17) extending in the peripheral direction around the expansion sleeve (9).

5. An expansion anchor according to claim 4, characterised in that the expansion sleeve (9) has a shoulder (16) on the side of the annular groove (17) which faces away from the expansion segments (18).

6. An expansion anchor according to claim 5 characterised in that the inside diameter of the expansion sleeve (9) is constant in the longitudinal direction while the outside diameter is at its largest in the region of the shoulder (16) and is identical to the outside diameter at the front end of the expansion segments (18) in the un-expanded condition.

7. An expansion anchor according to claim 1 characterised in that entrainment claws (13, 14) are provided on the end (12) of the expansion sleeve (9) which is in opposite relationship to the cutting inserts (22).

8. An expansion anchor according to one of the preceding claims characterised in that in the front region of the anchor rod (1) the expansion cone (5) passes into two cylindrical portions (6, 7).

## Revendications

1. Ancre à expansion qui, à l'extrémité antérieure (4) par rapport au sens d'introduction, comporte un cône à expansion (5) s'étendant dans le sens de l'introduction, sur lequel est montée coulissante une douille à expansion (9) qui est munie d'une pluralité de fentes longitudinales (10) s'étendant à partir de son chant antérieur (11), celles-ci formant au moins deux lames d'expansion (18) disposées en vis-à-vis qui sur leurs surfaces frontales (21) disposées dans le sens de l'introduction sont munies d'inserts de coupe (22), caractérisée en ce que le cône à expansion (5) est disposé à l'extrémité antérieure d'une tige à expansion (1), sur laquelle la douille à expansion (9) est montée coulissante dans le sens axial et que l'épaisseur de paroi de la douille à expansion (9) augmente régulièrement sur la longueur des lames d'expansion (18) en direction de leurs surfaces frontales (21).

2. Ancre à expansion selon la revendication 1, caractérisée en ce que les fentes longitudinales (10) sont disposées dans des plans qui sont décalés latéralement par rapport aux plans radiaux de la douille à expansion (9).

3. Ancre à expansion selon la revendication 2, caractérisée en ce que les fentes longitudinales (10) sont disposées dans quatre plans, dont la première paire (25) définit en coupe avec la surface frontale (21) une première paire de cordes et dont la seconde paire (26) s'étend à angle droit par rapport à la première paire (25) avec le même écart relatif.

4. Ancre à expansion selon la revendication 1, caractérisée en ce que les fentes longitudinales (10) s'étendent jusqu'à une rainure annulaire (17) s'étendant autour de la douille à expansion (9) en direction périphérique.

5. Ancre à expansion selon la revendication 4, caractérisée en ce que la douille à expansion (9) comporte sur le côté opposé aux lames d'expansion (18) de la rainure annulaire (17) un épaulement (16).

6. Ancre à expansion selon la revendication 5, caractérisée en ce que le diamètre intérieur de la douille à expansion (9) est constant en direction longitudinale, tandis que le diamètre extérieur est le plus grand dans la zone de l'épaulement (16) et qu'il correspond au diamètre extérieur à l'extrémité antérieure des lames à expansion (18) non écartées.

7. Ancre à expansion selon la revendication 1, caractérisée en ce que sur les faces frontales (12) opposées aux inserts de coupe (22) de la douille à expansion (9) sont prévues des griffes d'entrainement (13, 14).

8. Ancre à expansion selon l'une quelconque des revendications précédentes, caractérisée en ce que le cône à expansion (5) se prolonge dans la zone antérieure de la tige à expansion (5) en deux sections cylindriques (6, 7).

*Fig. 1*

*Fig. 2*

*Fig. 3*

EP 0 217 053 B1

Fig. 4

Fig. 5